# EUROPEAN PATENT APPLICATION

(11) **EP 1 634 801 A2**
(43) Date of publication of application: **15.03.2006**
(21) Application number: 05103582.2
(22) Date of filing: 29.04.2005
(51) Int. Cl.: B62J 7/08, B62J 9/00

(54) **Device for attaching cases to motorcycles and similar vehicles**

(30) Priority: 09.09.2004 ES 200402089 U
(71) Applicant: NAD, S.A., 08100 Mollet del Valles (ES)
(72) Inventor: Lucia Monforte, Pedro, 08100 Mollet del Valles (ES)
(74) Representative: Ponti Sales, Adelaida

(57) **Abstract**

It comprises removable attaching means of the case to a fixing plate (14) attached to the motorcycle chassis and means for actuating said attaching means. Said means for actuating said attaching means of the case to a fixing plate (14) are located on the bottom side of the case.

## Description

The present invention refers to a device for attaching cases to motorcycles and similar vehicles.

### BACKGROUND OF THE INVENTION

Cases of different configurations which are attachable to the rear part of motorcycles are known. Said cases allow transporting objects with said vehicles in a comfortable and secure way, and they can also be used as common cases removing them from the fixing plate of the motorcycle to which they are fixed.

The aforesaid cases have an attaching mechanism to the fixing plate of the motorbike which allows attaching and removing them therefrom by actuating a knob, lever or push button located on the rear part of the case, usually on the cover.

However, for soft cases, made of textile materials, a lower plastic platform carrying the attaching mechanism of the case to the motorbike and the opening and closing device of said attaching means is usually used. Since said opening and closing device is located on the rear part of the platform, the same platform can't be used for longer cases, as the device would not be accessible or it would not allow mounting a case longer than the platform.

### DESCRIPTON OF THE INVENTION

The aim of the present invention is to solve the disadvantages of the devices present in the art, providing a device for attaching cases to motorcycles and similar vehicles, which comprises removable attaching means of the case to a fixing plate attached to the motorcycle chassis and means for actuating said attaching means, characterized in that said means for actuating said attaching means of the case to a fixing plate are located on the bottom side of the case.

Therefore, the mechanism for actuating the latch which attaches the case to the fixing plate of the bike is hidden and protected from the rain and other external factors which can damage it. The size and compacity of the case are substantially improved, as the mechanism occupies less space.

Moreover, a common platform can be used for different length cases, especially for soft cases, as since the opening mechanism is located on its lower part, it does not constitute an obstacle if the rear part of the case has to be longer.

Preferably, the actuating means are located substantially parallel to the upper surface of the fixing plate.

Advantageously, said removable attaching means of the case to the fixing plate comprise at least one projection located on the rear end of the case, at least one housing for inserting said at least one projection therein located on the rear part of the fixing plate, and a latch located on the bottom side of the case attachable to a hook located on the upper surface of the fixing plate.

Also advantageously, the means for actuating the attaching means of the case to the fixing plate comprise a lever hinged to the bottom side of the case and linked to an end of the latch, so that when said lever is actuated the latch is moved and attached or detached to the hook of the fixing plate.

According to an embodiment of the invention, the means for actuating the attaching means of the case to the fixing plate comprise blocking means of the lever when the latch is attached to the hook.

Advantageously, the means for actuating the attaching means of the case to the fixing plate comprise a spring for moving the latch back to the attached position to the hook and for actuating the blocking means of the lever.

Thanks to this configuration, it is only necessary to unblock the lever by means of a simple movement, and pull it so as to move the latch to remove the case from the fixing panel. Subsequently, the case can be removed from the motorcycle quickly.

In order to attach the case to the motorbike again, it is placed over the fixing plate and pushed downwards so that the latch fits with the hook of the fixing plate. Subsequently, the lever is folded and it is automatically blocked in its closing position.

### BRIEF DESCRIPTON OF THE DRAWINGS

In order to assist the description of all that has been outlined above some drawings are attached which show schematically and solely by way of non-restrictive example a practical case of embodiment of the device of the invention, in which:
figures 1 and 2 are perspective views of the upper and lower face of the device of the invention, respectively;
figure 3 is a sectional view of the device of the invention;
figure 4 is a detail view of the set of the attaching mechanism of the device to the motorcycle and of the actuating mechanism thereof when the case is attached to the motorcycle;
figure 5 is a detail view of the set of the attaching mechanism of the device to the motorcycle and of the actuating mechanism thereof when it is actuated to remove the case from the motorcycle;
figure 6 is a perspective view of the device of the invention removed from the fixing plate of the motorcycle.

### DESCRIPTION OF A PREFERRED EMBODIMENT

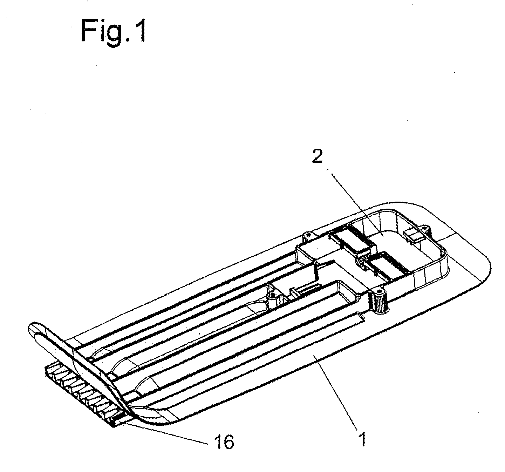

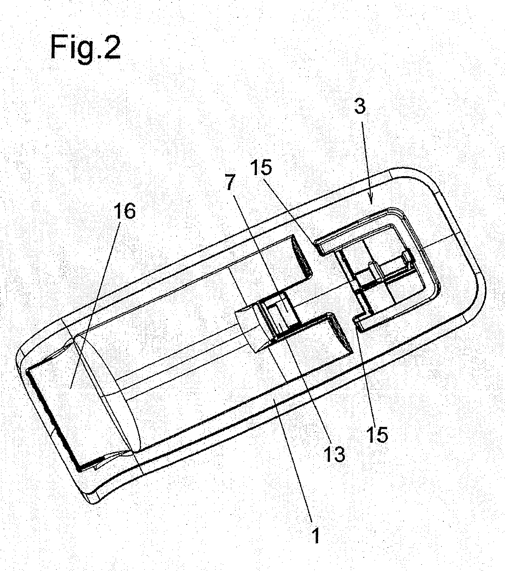

As shown in figures 1 and 2, the device of the invention comprises a platform 1 that includes a casing 2, which is closed by its upper part, in which the set 3 of the attaching mechanism of the device to the motorbike and the actuating mechanism thereof is housed. The platform 1 is part of a case (not shown) and its bottom constitutes one of its faces. Thus, the same platform 1 can be used for different case formats.

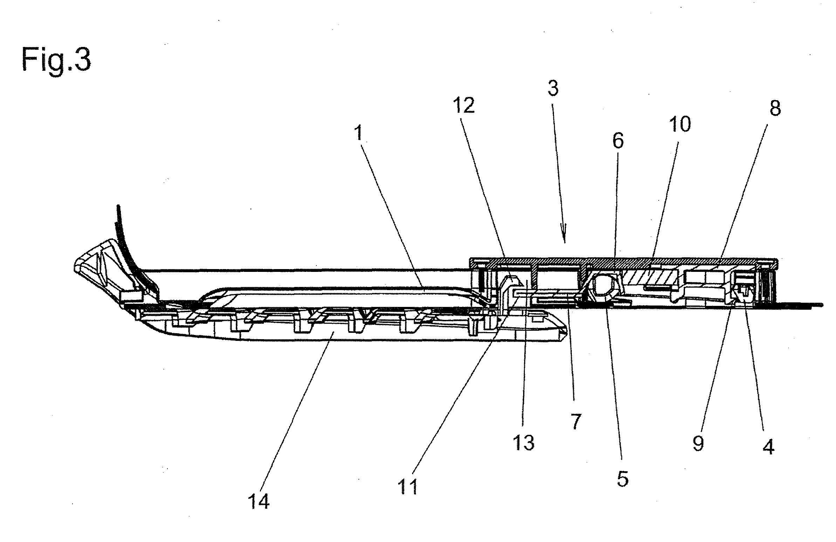

Figure 3 shows how the platform 1 and a fixing plate 14 of a motorbike are attached.

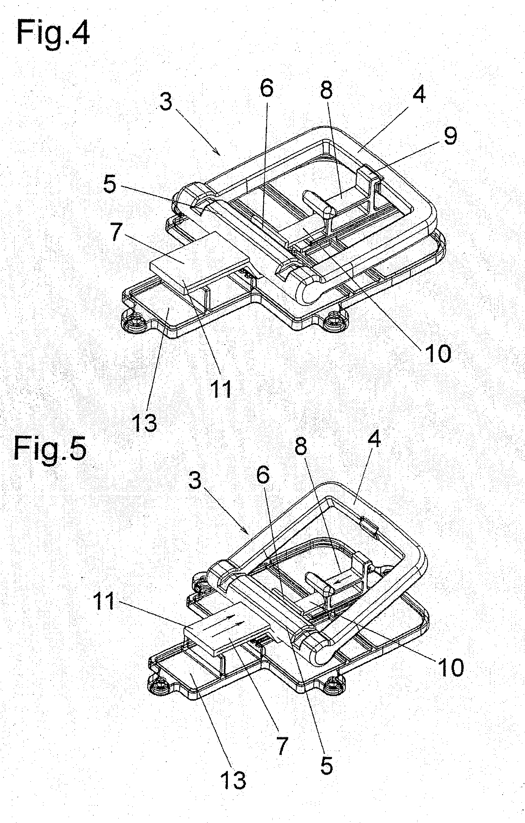

As shown in figures 3 and 4, the set 3 comprises a lever 4, which is folded and hinged to the platform 1. The axis 5 of said lever 4 is surrounded by its lower part by the end 6 of a latch 7. The opposite end 11 of the latch 7 fits with a hook 12 formed on a fixing plate 14 fixed to the chassis of the motorbike, in such a way that said hook 12 is retained inside a cavity 17 provided for this purpose.

In order to complete the attachment of the case to the fixing plate 14, there is a projection 16 on the rear end of the platform 1 that is inserted in a housing 17 in the rear part of the fixing plate 14, acting as a second anchoring point.

There is a sliding piece 8 aligned with the latch 7, that has the function of blocking the position of the lever 4 when it is folded by means of a hook 9.

In order to keep the latch 7 closed and to retain the lever 4 with the piece 8 effectively when it is folded, there is a spring 10 placed between the end 6 of the latch 7 and said piece 8, which pushes both elements in opposite directions.

Figure 5 shows how to remove the case from the motorbike.

In order to remove the case, the piece 8 has to be moved manually towards the latch 7, in such a way that the lever 4 is released from the hook 9. Subsequently, the lever 4 is opened moving it outwardly and pivoting on the axis 5. As the lever 4 pivots, the axis 5 is moved slightly towards the piece 8 due to the seats 15 (figure 2) provided on the platform 1, which actuate as a support, allowing the axis 5 to move the latch 7 against the expansion force of the spring 10.

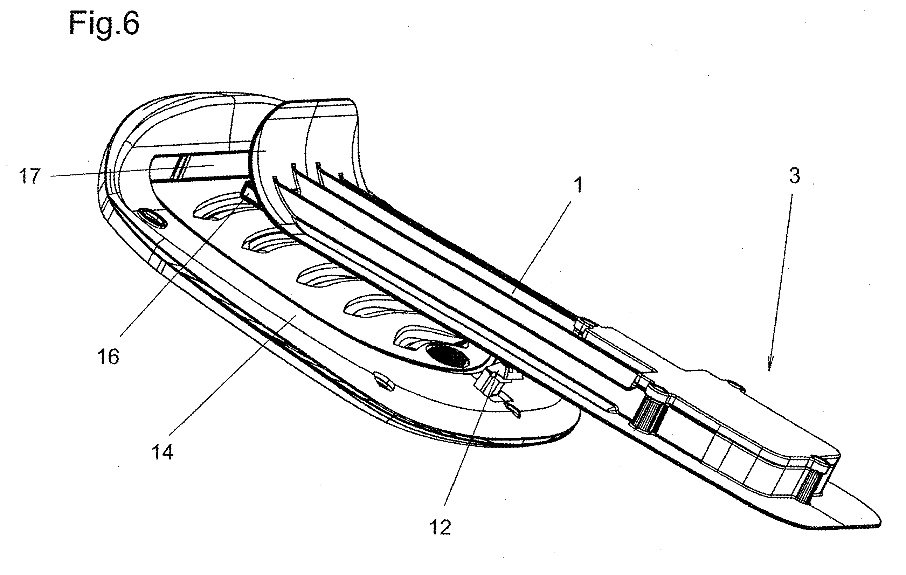

When the latch 7 is moved, the hook 12 of the fixing platform is released from its end 11, and the case can be removed (figure 6) pivoting the device and extracting the projection 16 from the housing 17 of the rear part of the fixing plate 14.

As it has been set out, the operation of attaching and detaching the case and the motorcycle is carried out from the bottom part of the case in a quick and easy way, and the device of the invention occupies the minimum space.

## Claims

1. Device for attaching cases to motorcycles and similar vehicles, which comprises removable attaching means of the case to a fixing plate (14) attached to the motorcycle chassis and means for actuating said attaching means, **characterized in that** said means for actuating said attaching means of the case to a fixing plate (14) are located on the bottom side of the case.

2. Device, according to claim 1, **characterized in that** the actuating means are located substantially parallel to the upper surface of the fixing plate (14).

3. Device, according to claims 1 or 2, **characterized in that** said removable attaching means of the case to the fixing plate (14) comprise at least one projection (16) located on the rear end of the case, at least one housing (17) for inserting said at least one projection (16) therein located on the rear part of the fixing plate, and a latch (7) located on the bottom side of the case attachable to a hook (12) located on the upper surface of the fixing plate (14).

4. Device, according to claim 3, **characterized in that** the means for actuating the attaching means of the case to the fixing plate comprise a lever (4) hinged to the bottom side of the case and linked to an end (11) of the latch (7), so that when said lever (4) is actuated, the latch (7) is moved and attached or detached to the hook (12) of the fixing plate (14).

5. Device, according to claim 4, **characterized in that** the means for actuating the attaching means of the case to the fixing plate (14) comprise blocking means (8) of the lever (4) when the latch (7) is attached to the hook (12).

6. Device, according to claim 5, **characterized in that** the means for actuating the attaching means of the case to the fixing plate (14) comprise a spring (10) for moving the latch (7) back to the attached position to the hook (12) and for actuating the blocking means (8) of the lever (4).
